# EUROPÄISCHE PATENTSCHRIFT

(11) **EP 0 503 270 B1**
(45) Veröffentlichungstag und Bekanntmachung des Hinweises auf die Patenterteilung: **29.05.1996**
(21) Anmeldenummer: 92101960.0
(22) Anmeldetag: 06.02.1992
(51) Int. Cl.: H04N 7/08

(54) **Verfahren zum Senden von Fernsehsignalen**
Method for transmitting television signals
Procédé d'émission de signaux de télévision

(30) Priorität: 15.03.1991 DE 4108558
(43) Veröffentlichungstag der Anmeldung: 16.09.1992
(73) Patentinhaber: Nokia (Deutschland) GmbH, D-75175 Pforzheim (DE)
(72) Erfinder: Reime, Gerd, W-7542 Schömberg 4 (DE)

(56) Entgegenhaltungen:
- DE-B- 1 252 731
- US-A- 2 644 942
- US-A- 3 700 793
- US-A- 4 051 532
- EBU TECHNICAL DOCUMENT TECH. 3254-E PLANNING PARAMETERS AND METHODS FOR TERRESTRIAL TELEVISION BROADCASTING IN THE VHF/UHF BANDS 30. Mai 1988, TECHNICAL CENTRE BRUSSELS Seiten 23 - 34; 'Chapter 2 Planning parameters for terrestrial television'
- EBU TECHNICAL DOCUMENT TECH. 3254-E , PLANNING PARAMETERS AND METHODS FOR TERRESTRIAL TELEVISION BROADCASTING IN THE VHF/UHF BANDS 30. Mai 1988, TECHNICAL CENTRE , BRUSSELS Seiten 35 - 50; 'Appendix A2, CCIR Recommendations 655 (CCIR XVI-th Plenary Assembly, Dubrovnik 1986 , Radio-Frequency protection ratios for AM vestigial sideband television systems'

## Beschreibung

### TECHNISCHES GEBIET

Die Erfindung betrifft ein Verfahren zum Senden von Fernsehsignalen. Im folgenden wird unter einem Videosignal ein solches Signal verstanden, das Luminanzinformation, Chromainformation sowie Austast- und Synchronisiersignale enthält. Zusätzlich können noch Textsignale in den Videosignalen enthalten sein. In einem Fernsehsender wird ein Trägersignal mit dem Videosignal moduliert und zwar bei derzeitigen Verfahren in der Regel in Amplitudenmodulation, nach neueren Verfahren auch in Frequenzmodulation. Das mit dem Videosignal modulierte Trägersignal, das ausgesendet wird, wird hier als Fernsehsignal bezeichnet.

### STAND DER TECHNIK

Um mit einem Fernsehgerät gleichzeitig gesendete Programme getrennt empfangen zu können, werden die Fernsehsignale für unterschiedliche Programme mit unterschiedlichen Trägerfrequenzen ausgestrahlt. Jeder Trägerfrequenz ist ein sogenannter Kanal zugeordnet. Der Kanalabstand im UHF-Bereich beträgt z. B. 8 MHz.

Bei der Zuordnung von Kanälen zu Programmen und Sendern ist man bemüht, die Auswahl so zu treffen, daß an einem jeweiligen Empfangsort in jedem Kanal jeweils nur ein Sender empfangen wird. Wenn die Gefahr besteht, daß sich zwei Sender, die im gleichen Kanal arbeiten, an einem Empfangsort stören könnten, werden die Trägerfrequenzen leicht gegeneinander versetzt. Man nennt dies Offset-Betrieb. In Deutschland wird ein Versatz von +/-1 bis 12 Zwölftel der Zeilenfrequenz angewendet.

Auch bei exakter Einhaltung der Offsetfrequenzen bleibt beim Vorhandensein eines Störsenders eine sichtbare Störung in Form horizontaler Streifen übrig.

Es bestand demgemäß das Problem, ein Verfahren zum Senden von Fernsehsignalen anzugeben, mit dem noch besser als bisher vermieden werden kann, daß sich Sender, die im gleichen Kanal arbeiten, gegenseitig beim Empfang stören.

DE-B-1 252 731 zeigt das Pal-Verfahren, bei welchem der Farbträger zeitenweise um 180° gedreht wird.

### DARSTELLUNG DER ERFINDUNG

Beim erfindungsgemäßen Verfahren zum Senden von Fernsehsignalen gemäß Anspruch 1 wird die Phase des Trägers eines der im gleichen Kanal ohne Offset betriebenen Senders von Zeile zu Zeile des Videosignals um 180 Grad geändert. Das Schalten der Phase erfolgt vorzugsweise gemäß Anspruch 2 in der Dauer des nicht sichtbaren Teils der Zeilen.

Diese Maßnahme zieht den Effekt nach sich, daß sich eine Störung, die von einem schwächeren Störsender im gleichen Kanal wie ein stärkerer Sender hervorgerufen wird, in aufeinanderfolgenden Zeilen jeweils gegenläufig auswirkt. Zum Beispiel steht einer Störung, die einen Bildpunkt in einer ersten Zeile aufhellt, eine gleich große Störung in der Folgezeile in Richtung dunkler gegenüber. Das Umgekehrte gilt entsprechend. Diese gegenläufigen Störungen gleicht der Gesichtssinn des Betrachters vor allem bei größerem Betrachtungsabstand automatisch aus. Störungen dieser Art können aber auch elektronisch durch eine bewertete Zeilenaddition unterdrückt werden, wie in GB-A-2 141 303 beschrieben.

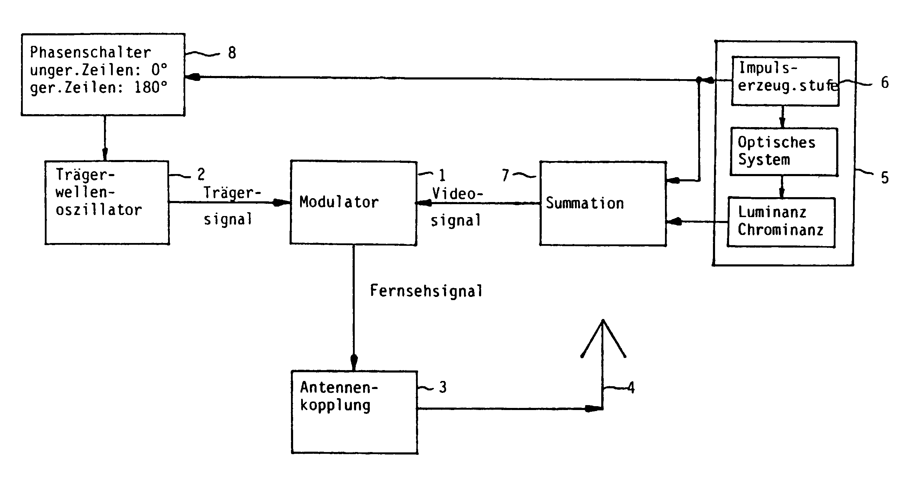

### KURZE BESCHREIBUNG DER FIGUR

Die Erfindung wird im folgenden anhand eines durch eine Figur veranschaulichten Ausführungsbeispiels erläutert. Diese Figur ist ein Blockschaltbild eines Senders mit der erfindungsgemäßen Phasenumschaltung von Zeile zu Zeile.

### WEGE ZUM AUSFÜHREN DER ERFINDUNG

Das Blockschaltbild gemäß der Figur weist als Blöcke eines herkömmlichen Senders einen Modulator 1, einen Trägerwellenoszillator 2, eine Antennenkopplung 3 und eine Antenne 4 auf. Der Modulator moduliert in üblicher Weise das ihm vom Trägerwellenoszillator 2 zugeführte Trägersignal mit einem Videosignal, welches ihm ebenfalls zugeführt wird. Das von ihm ausgegebene Fernsehsignal wird über die Antennenkopplung zur Antenne 4 gegeben und von dieser ausgestrahlt.

Das dem Modulator 1 zugeführte Videosignal kann auf beliebige Weise gewonnen werden. Im Blockschaltbild der Figur ist angenommen,daß es von einer Kamera 5 geliefert wird, die von einer Impulserzeugungsstufe 6 mit Synchronisier- und Austastsignalen versehen wird. Diese Signale werden auch in einer Summationsstufe 7 verarbeitet, in der sie zu Luminanz- und Chromasignalen addiert werden,die von der Kamera 5 ausgegeben werden. Neu gegenüber dem Blockschaltbild eines herkömmlichen Senders ist im Blockschaltbild der Figur ein Phasenschalter 8. Dieser wird von der Impulserzeugungsstufe 6 angesteuert und gibt sein Ausgangssignal an den Trägerwellenoszillator 2 ab, um die Phase des Trägersignals von Zeile zu Zeile des Videosignals um 180 Grad zu ändern.

Wenn das Videosignal auf andere als die vorstehend beschriebene Weise erzeugt und an den Modulator gegeben wird, z. B. durch Abspielen von einem Magnetbandgerät, werden die Horizontalsynchronisierimpulse für die Zeilenschaltung von dem jeweiligen Videosignallieferanten, also z. B. dem Magnetbandgerät, ausgegeben.

Die Wirkung dieser Maßnahme beim Senden tritt beim Empfangen der so behandelten Fernsehsignale in Erscheinung, was im folgenden erläutert wird.

Es sei angenommen, daß der Tuner eines Fernsehgeräts zum Empfang eines Programms auf einem Kanal eingestellt ist, auf dem ein Sender stark und ein zweiter Sender schwach sendet, wobei diese Sender in keiner Offset-Beziehung zueinander stehen, also auf derselben Frequenz senden. Es sei ferner angenommen, daß die beiden Sender in jedem Zeitpunkt voneinander unterschiedliche Bilder ausstrahlen. Nun ist bekannt, daß sich der Inhalt von Fernsehbildern für die meisten Zeilen nur wenig von Zeile zu Zeile ändert. Dies gilt im vorliegenden Fall sowohl für das vom stark empfangenen Sender gesendete Bild wie auch für das vom schwach empfangenen Sender gesendete Bild. Zu einem gewissen Zeitpunkt innerhalb einer Zeile möge das Fernsehsignal (also das modulierte Trägersignal) vom stark empfangenen Sender eine bestimmte Amplitude aufweisen und dasselbe gelte für das Signal vom schwach empfangenen Sender. Wird in der nächsten Zeile derselbe relative Zeitpunkt wieder erreicht, würden wegen der geringen Veränderung des Informationsgehalts von Zeile zu Zeile in beiden Signalen wieder in etwa dieselben Werte vorliegen, wenn nicht im Signal des einen Senders die oben genannte Phaseninvertierung vorgenommen wäre. Es sei zunächst angenommen, der schwächer empfangene Sender sei derjenige mit Phaseninvertierung von Zeile zu Zeile. In diesem Fall weist das Signal des stärker empfangenen Senders zum genannten Zeitpunkt innerhalb einer Zeile wieder denselben positiven Wert auf wie in der Vorzeile, jedoch weist das Signal des schwächer empfangenen Senders nun einen negativen Wert auf, jedoch mit gleicher Amplitude wie in der Vorzeile. Beim Beispiel wird also in der Vorzeile die Amplitude des Signals vom starken Sender erhöht, während sie zum entsprechenden Zeitpunkt in der aktuellen Zeile erniedrigt wird. Dies gilt unabhängig davon, ob die Träger amplituden- oder frequenzmoduliert sind oder ob der eine amplitudenmoduliert und der andere frequenzmoduliert ist. Wesentlich ist nur, daß sich in beiden Bildern der Inhalt von Zeile zu Zeile nur wenig ändert, was für bei durch Gleichkanalstörung optisch beeinträchtigten Videosignalen grundsätzlich der Fall ist, und daß die Träger der beiden Sender nur eine geringe Phasenverschiebung über eine Zeile hinweg aufweisen, was ebenfalls der Fall ist.

Festzuhalten bleibt, daß das stark empfangene Signal von Zeile zu Zeile einen Fehler mit umgekehrtem Vorzeichen empfängt. Wenn dieser Fehler in einer Vorzeile zu einer Bildaufhellung an einem bestimmten Bildpunkt führt, hat der Fehler in der aktuellen Zeile eine entsprechende Verdunklung an einem Bildpunkt in entsprechender horizontaler Lage zur Folge. Diese Aufhellung in der Vorzeile und die Abdunklung in der aktuellen Zeile aufgrund der Störung heben sich optisch gegeneinander für alle Bildpunkte entlang jeweils zweier benachbarter Zeilen auf.

Genau dasselbe gilt dann, wenn nicht der Träger des schwächer empfangenen Senders von Zeile zu Zeile in der Phase invertiert, sondern die Phase des stärker empfangenen Senders. Es seien wiederum in einer Vorzeile für einen bestimmten Bildpunkt die Signale von beiden Sendern positiv. In der aktuellen Zeile für eine Bildpunktin entsprechender horizontaler Lage ist dann das Signal vom Störsender nach wie vor positiv, während dasjenige vom stärker empfangenen Sender in der Phase invertiert, also negativ ist. Auch hier wirkt sich also wieder der Störsender als von Zeile zu Zeile umgekehrt wirkende Störung aus. Es ist zu beachten, daß sich im Fernsehgerät der Hochfrequenzmodulator immer auf das am stärksten empfangene Signal einstellt, also in seiner Arbeit durch die Phaseninvertierung des Trägers des im Beispiel schwächer empfangenen Senders nur schwach beeinflußt wird. Es wird also immerdas Signal vom stärker empfangenen Sender als Hauptsignal und das Signal vom schwächer empfangenen Sender als Störsignal verarbeitet, unabhängig davon, welcher Sender mit Invertierung des Trägersignals von Zeile zu Zeile arbeitet. Wenn die Phase des stark empfangenen Senders geschaltet wird, kommt es im Demodulator zu einer kurzfristigen Störung, die jedoch innerhalb weniger Schwingungen des Trägersignals ausgeglichen ist. Wegen der hohen Frequenz des Trägersignals ist die Störzeit so kurz, daß die Störung selbst dann kaum wahrgenommen wird, wenn das Umschalten der Trägerphase im sichtbaren Teil einer Zeile erfolgt. Um jedoch auch mögliches Sichtbarwerden von Schaltfehlern zu hindern, was in ungünstigen Fällen auftreten kann, ist es von Vorteil, die Phase des Trägersignals in der Dauer des nicht sichtbaren Teils der Zeilen zu schalten.

Im vorigen wurde davon ausgegangen, daß die aufgrund der Phaseninvertierung des einen Senders von Zeile zu Zeile entgegengesetzt wirkende Störung durch den Gesichtssinn des Betrachters ausgeglichen wird. Es ist jedoch auch ein elektronischer Ausgleich mit einer herkömmlichen Störungsunterdrückungsschaltung möglich, bei der die Signale zweier Zeilen, also einer aktuellen Zeile und der um eine Horizontalperiode verzögerten Vorzeile, zueinander addiert werden. Solche Verfahren nutzen die oben erwähnte Tatsache, daß sich in einem Videosignal die Informationen aufeinanderfolgender Zeilen meistens nur wenig ändern, daß allerdings Störsignale in statistischer Verteilung vorliegen. Durch Addieren der Videosignale wird die durch die Phasenumschaltung zeilenweise invertierte Störung ausgelöscht und andere Störsignale insbesondere Rauschen, werden um 3 dB (auf √2/2) reduziert. Verfälschungen können allerdings an horizontal verlaufenden Bildinhaltswechseln auftreten. Um hier ein unerwünschtes Ausmitteln durch das genannte Rauschunterdrückungsverfahren zu vermeiden, ist es weiterhin bekannt, das Verfahren dadurch zu modifizieren, daß die Signale der beiden genannten Zeilen auch voneinander abgezogen werden und das Differenzsignal zum genannten addierten Signal gegebenenfallswieder addiert wird, nämlich dann, wenn die Differenz einen vorgegebenen Wert überschreitet. Dies hat zur Folge, daß kleinere Differenzen, wie sie durch Rauschsignale oder auch durch Störsignale eines schwach empfangenen Gleichkanalsenders entstehen, unterdrückt werden, dagegen bei starken horizontalen Bildinhaltsänderungen ein starkes Differenzsignal zum genannten Additionssignal addiert wird, wodurch der ausmittelnde Einfluß der ersten Addition wieder aufgehoben wird. Ein derartiges Verfahren ist ausführlich z. B. in GB-A-2 141 303 beschrieben.

## Patentansprüche

1. Verfahren zum Vermeiden von Gleichkanalstörungen beim Senden von Fernsehsignalen mittels verschiedener Sender auf Trägersignalen mit gleicher Trägerfrequenz, wobei jedes Fernsehsignal ein auf ein Trägersignal moduliertes Videosignal darstellt, das Luminanzinformation, Chrominanzinformation und Austast- und Synchronsignale enthält, dadurch gekennzeichnet, daß die Phase, mindestens von einem Trägersignal zeilenweise um 180 Grad gedreht wird.

2. Verfahren nach Anspruch 1,
**dadurch gekennzeichnet**, daß die Phasenänderung in der Dauer des nicht sichtbaren Teils der Zeilen erfolgt.

## Claims

1. Process for preventing co-channel interference when transmitting television signals by means of different transmitters on carrier signals having the same carrier frequency, each television signal representing a video signal modulated onto a carrier signal, which video signal contains the luminance information, chrominance information as well as blanking and synchronising signals, **characterised in that** the phase, at least of one carrier signal, is shifted line-by-line by 180 degrees.

2. Process according to Claim 1, characterised in that the phase-change takes place in the interval when the lines are invisible.

## Revendications

1. Procédé pour éviter des perturbations sur voie commune lors de l'émission de signaux de télévision au moyen de différents émetteurs sur des signaux porteurs ayant la même fréquence porteuse, chaque signal de télévision constituant un signal vidéo qui est modulé sur un signal porteur et contient des informations de luminance, de chrominance et des signaux de suppression et de synchronisation, caractérisé par le fait que la phase, d'au moins un signal porteur, est décalée de 180° ligne par ligne.

2. Procédé selon la revendication 1, caractérisé par le fait que la modification de phase s'effectue dans la durée de la partie non visible des lignes.
